# EUROPÄISCHE PATENTSCHRIFT

(11) **EP 0 739 809 B1**
(45) Veröffentlichungstag und Bekanntmachung des Hinweises auf die Patenterteilung: **09.07.1997**
(21) Anmeldenummer: 95106094.6
(22) Anmeldetag: 24.04.1995
(51) Int. Cl.: B62J 7/04

(54) **Lastträger für ein Zweiradfahrzeug, insbesondere für ein Fahrrad**
Luggage-carrier for a two-wheeled vehicle, in particular for bicycles
Porte-bagages pour véhicules à deux roues, en particulier pour bicyclettes

(43) Veröffentlichungstag der Anmeldung: 30.10.1996
(73) Patentinhaber: GEBRÜDER PLETSCHER AG, CH-8460 Marthalen (CH)
(72) Erfinder: Weissenberger, Heinz, D-79771 Klettgau-Griessen (DE); Thévoz, Sylvain, CH-1530 Payerne (CH)
(74) Vertreter: Patentanwälte Schaad, Balass, Menzl & Partner AG

(56) Entgegenhaltungen:
- CH-A- 90 036
- DE-U- 9 411 316

## Beschreibung

Die Erfindung betrifft einen Lastträger für ein Zweiradfahrzeug, insbesondere für ein Fahrrad, nach dem Oberbegriff des Patentanspruchs 1.

Es sind Fahrradgepäckträger bekannt, die aus einem Tragkörper und diesen tragenden Streben bestehen, die paarweise seitlich des Tragkörpers vorgesehen sind. Im Endbereich dieser Streben ist an diesen eine Befestigungslasche angeschraubt oder angenietet, die mittels einer Schraube am Fahrzeugrahmen befestigt ist. Oben am Tragkörper sind in der Regel zwei vorstehende rohrförmige oder flächige Halterungen vorgesehen, die ebenfalls mittels Schrauben am Fahrzeugrahmen befestigt sind. Wegen der Art der Verbindung sind diese Gepäckträger ausschliesslich für eine dauernde Verbindung mit einem Fahrrad vorbestimmt.

In jüngster Zeit sind durch grössere Anforderungen an die Fahrräder für Freizeit und Sport neuartige Fahrräder auf den Markt gelangt, die beispielsweise unter der Bezeichnung "Mountainbike" bekannt sind. Bei solchen Fahrrädern ist es typisch, dass keine festmontierten Gepäckträger vorgesehen sind, da diese die sportlicher, Aktivitäten in vielfacher Hinsicht behindern können. Aus diesem Grunde werden allfällige Gepäckstücke in einem Rucksack auf dem Rücken mitgenommen. Nachteilig dabei ist, dass schwerere, sperrige oder kantige Gepäckstücke in der Regel nicht mit einem solchen Fahrrad befördert werden können.

Aus DE-U-9411316 ist ein Lastträger der eingangs erwähnten Art mit einem Tragkörper und diesen stützenden Streben bekannt, dessen im unteren Bereich der Streben montierten unteren Befestigungselemente auf eine Gewindestange je einer im Bereich der Hinterachse eines Fahrrades an diesem montierten unteren Schnellspannvorrichtung aufsteckbar und mittels je eines auf jede Gewindestange aufgeschraubten Spannhebels festklemmbar sind. Am Tragkörper dieses Lastträgers ist ein als oberes Befestigungselement dienender Haken angebracht, der mittels einer am Sattelrohr des Fahrrades montierten oberen Schnellspannvorrichtung am Fahrrad befestigbar ist. Dieser Lastträger kann nicht an ein Fahrrad angebracht werden, welches nicht mit der erwähnten oberen und den unteren Schnellspannvorrichtungen ausgerüstet ist.

Der vorliegenden Erfindung liegt deshalb die Aufgabe zugrunde, einen Lastträger oder Gepäckträger der vorgenannten Art vorzusehen, der eine schnelle Montage und Demontage an einem gepäckträgerlosen Zweiradfahrzeug, insbesondere Fahrrad, ermöglicht.

Diese Aufgabe wird durch einen Lastträger mit dem Merkmalen des Patentanspruchs 1 gelöst.

Die vorliegende Erfindung beruht auf der Erkenntnis, dass eine Schnellbefestigung ohne die Verwendung irgendwelcher Werkzeuge gerade im Bereich der Radaufhängung erst durch ein Ineinandergreifen von gegengleichen Befestigungselementen und ein Sichern von diesen durch eine relative Drehung zueinander ermöglicht wird. Als weiteres Erfordernis dabei ist, dass die dazu benötigten Hilfsmittel entweder mit dem Last- oder Gepäckträger oder mit dem Fahrzeug selber fest verbunden sein müssen, damit diese nicht verlorengehen. Dadurch dass der Lastträger im Bereich der Radaufhängung einfach aufgesteckt und leicht verdreht werden kann, um dort eine Befestigung mit dem Fahrzeug zu erwirken, ist ein manuell bedienbarer Klemmverschluss für die Befestigung im Bereich des Sattels, d.h. am Sattelrohr oder in dessen unmittelbaren Umgebung am Fahrzeugrahmen, vorgesehen.

Der erfindungsgemässe Lastträger lässt sich mit ein paar Handgriffen sicher und äusserst schnell an einem Zweiradfahrzeug wie ein Fahrrad befestigen und wieder entfernen. Selbstverständlich ist der erfindungsgemässe Lastträger nicht nur für sogenannte Mountainbikes geeignet, sondern kann mit Vorteil auch an Rennfahrräder angebracht werden. Des weiteren ist der Lastträger nicht notwendigerweise als übliche Gepäckträger vorgesehen, sondern kann ebenfalls einen Behälter oder einen integrierten Kindersitz aufweisen.

Weitere Vorteile der Erfindung folgen aus den abhängigen Patentansprüchen und der nachfolgenden Beschreibung, in welcher die Erfindung anhand eines in den schematischen Zeichnungen dargestellten Ausführungsbeispieles näher erläutert wird. Es zeigt:
- Fig. 1: eine Ansicht eines Fahrrades mit einem Lastträger,
- Fig. 2: die Befestigung im unteren Bereich des Lastträger mit dem Fahrradrahmen,
- Fig. 3: die Befestigung im oberen Bereich des Lastträgers mit dem Sattelrohr,
- Fig. 4: dieselbe Befestigung wie in Figur 3 in festgeklemmtem Zustand,
- Fig. 5: dieselbe Befestigung wie in Figur 3 in geöffnetem Zustand, und
- Fig. 6: den Montageablauf des Lastträgers.

In den Figuren sind für dieselben Elemente jeweils dieselben Bezugszeichen verwendet worden und gelten erstmalige Erklärungen zu den Elementen für alle Figuren, wenn nicht ausdrücklich anders erwähnt.

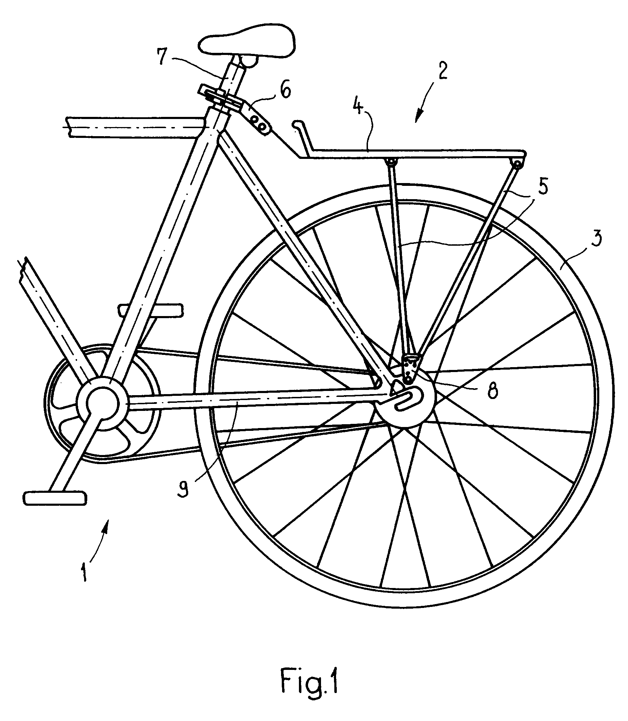

In Figur 1 ist rein schematisch und in Teilansicht ein Zweiradfahrzeug oder Fahrrad 1 mit einem Lastträger 2 vor allem im Bereich des Hinterrades 3 dargestellt. Der Lastträger 2 weist einen Tragkörper 4 mit auf beiden Seiten Stützstreben 5 auf. Der Tragkörper 4 ist mit einem oberen Befestigungselement 6 am Sattelrohr 7 des Fahrrades 1 befestigt. Im Bereich der Streben 5 ist der Lastträger 2 mit einem unteren Befestigungselement 8 am Fahrradrahmen 9 befestigt.

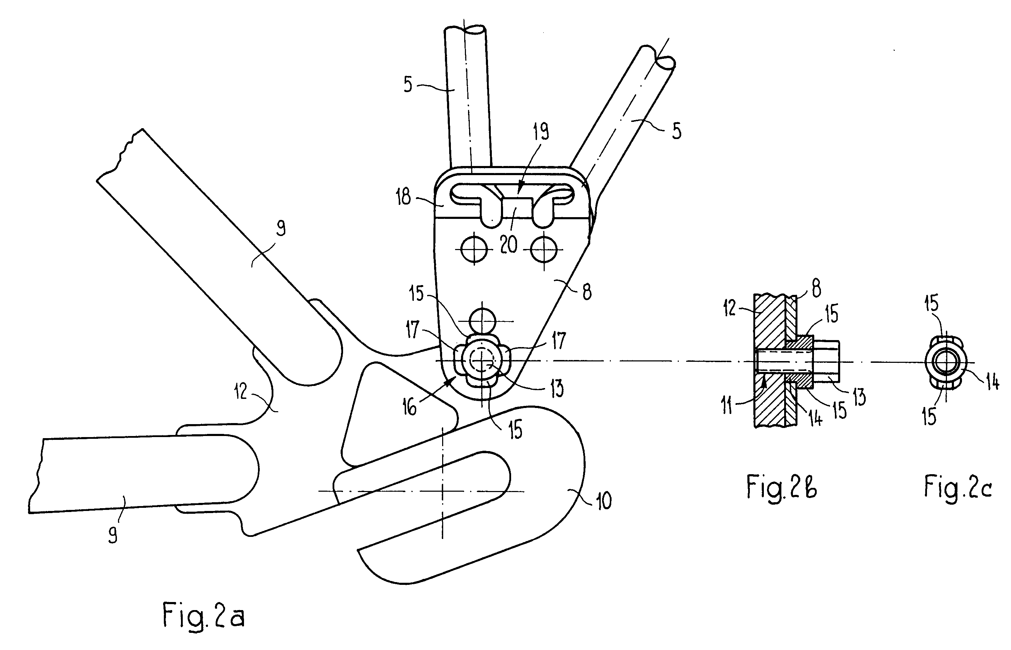

In Figur 2a ist die Befestigung des Lastträgers 2 mit dem Fahrradrahmen 9 deutlicher erkennbar. Üblicherweise befindet sich am Fahrradrahmen 9 im Bereich der Hinterradaufhängung 10 eine Gewindebohrung 11 in der Verbindungsplatte 12, in welcher gewöhnlich eine Schraube zur Montage eines festmontierten Gepäckträgers eingeschraubt wird (vergleiche auch den Querschnitt in Figur 2b). Stattdessen ist hier eine Inbusschraube 13 mit einem hülsenförmigen Halteteil 14 mit der Verbindungsplatte 12 befestigt. Falls keine Gewindebohrung 11 am Fahrrad 1 an dieser Stelle vorhanden ist, lässt sich eine solche problemlos dort anbringen, um das Halteteil 14 anzuschrauben. Das Halteteil 14 weist radiale Haltenocken 15 auf, die in eine kreiszylindrische Öffnung 16 mit radialen Ausnehmungen 17 im unteren Befestigungselement 8 hineinpassen. Das als dreieckige Platte ausgebildete untere Befestigungselement 8 weist ferner ein von den Stützstreben 5 abgewinkelter Seitenteil 18 mit einem Langloch 19 und einer nach innen vorstehenden Drehsicherung 20 auf zum Einklinken eines an sich bekannten und hier nicht dargestellten Schnellbinders mit entsprechenden Haken. Wie aus Figur 2c ersichtlich, sind die Haltenocken 15 seitlich leicht angeschrägt, damit diese leicht auf die Platte 8 beim Verdrehen des Lastträgers 2 auflaufen und diese somit hintergreifen können. Es versteht sich, dass die Öffnung 16 der Platte 8 und das Halteteil 14 mit den Haltenocken 15 in der Art einer Renkverbindung, insbesondere einer Bajonettverbindung, zusammenwirken, d.h. dass die Platte 8 in einer zur Darstellung der Figur 2a um 90° in Uhrzeigersinn verdrehten Zustand auf das von der Inbusschraube 13 gehaltene Halteteil 14 aufgesteckt und schon durch eine geringe Verdrehung in Gegenuhrzeigersinn von diesem gegen sich seitliches Lösen gesichert wird.

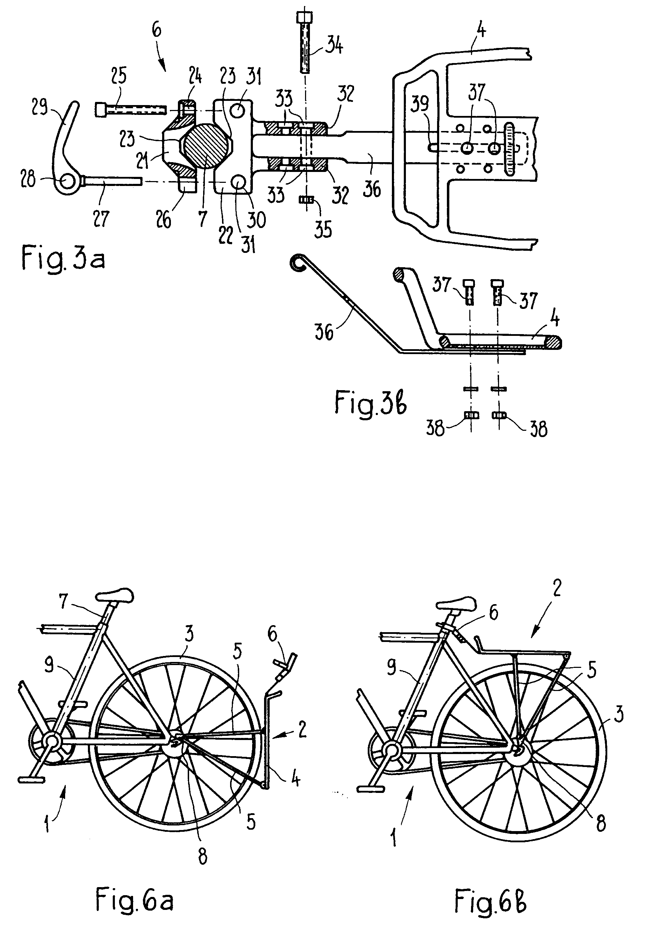

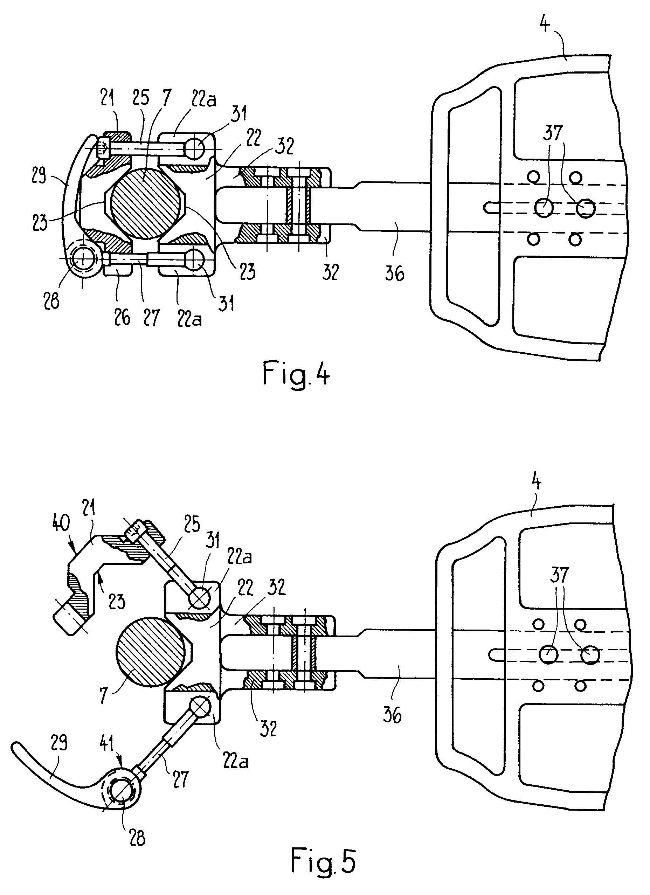

In Figur 3a ist die Klemmbefestigung des oberen Befestigungselementes 6 am Sattelrohr 7 in einer Explosionsdarstellung ersichtlich. Das Befestigungselement 6 weist zwei Klemmteile 21 und 22 auf, die je das Sattelrohr 7 mit einem V-förmigen Ausschnitt 23 umgreifen. Das Klemmteil 21 weist eine durchgehende Bohrung 24 zur Aufnahme einer Inbusschraube 25 und an der gegenüberliegenden Seite eine Längsnut 26 zur Aufnahme eines Stiftes 27 auf, welcher mit einem Gewinde versehen ist. Im Endbereich des Stiftes 27 ist ein Querbolzen 28 aufgepresst, der einen Spannhebel 29 drehbar auf dem Stift 27 lagert. Im Klemmteil 22 sind durchgehende, etwa parallel zum Sattelrohr 7 verlaufende Bohrungen 30 für Querbolzen 31 vorgesehen, die quer zu ihrer Längrichtung ein Gewinde aufweisen. Die Querbolzen 31 sind auf der Inbusschraube 25 bzw. auf dem mit einem Gewinde versehenen Endbereich des Stiftes 27 aufgeschraubt. Im Bereich der Bohrungen 30 sind am Klemmteil 22 auf den gegenüberliegenden Seiten Längsnuten 22a (siehe Figuren 4 und 5) vorgesehen, damit die Inbusschraube 25 bzw. der Stift 27 im Klemmteil 22 drehbar gelagert ist. Das Klemmteil 22 weist zwei parallele abgewinkelte Finger 32 auf, die je zwei durchgehende Bohrungen 33 zur Aufnahme einer Befestigungsschraube 34 mit einer Mutter 35 aufweisen, um eine winkelförmige Lasche 36 zu befestigen, die auf ihrer anderen Seite mittels Schrauben 37 und Muttern 38 am Lastträger 2 festgeschraubt ist (vergleiche Figur 3b). Wie in Figur 3a ersichtlich, weist die Lasche 36 einen Längsschlitz 39 auf, damit der Abstand des Lastträgers 2 zum Sattelrohr 7 eingestellt werden kann.

Die Figuren 4 und 5 entsprechen der Darstellung der Figur 3 und zeigen das obere Befestigungselement 6 in geschlossenem Zustand und in geöffnetem Zustand. Die Funktionsweise dieses oberen Befestigungselementes 6 ist folgendermassen: Nachdem der Lastträger 2 mit seinem Tragkörper 4 gegen das Sattelrohr 7 verschwenkt worden ist, um die Haltenocken 15 hinter die Platte 8 greifen zu lassen und den Lastträger 2 so unten zu befestigen, liegt das Klemmteil 22 gegen dem Sattelrohr 7 an. Sodann kann das andere Klemmteil 21 um das Sattelrohr 7 herum angelegt werden, so dass die beiden Klemmteile 21 und 22 das Sattelrohr 7 umgreifen. Der Stift 27 wird dann mit dem Spannhebel 29 in die Längsnut 26 eingelegt und der Spannhebel 29 um die buckelförmige Aussenseite 40 des Klemmteiles 21 gelegt. Dadurch wird in an sich bekannter Weise durch die kreiszylindrische Kulisse 41 am Spannhebel 29 das Klemmteil 21 gegen das Klemmteil 22 gespannt, so dass eine Klemmverbindung mit dem Sattelrohr 7 bewirkt wird. Aus den Figuren 6a und 6b ist diese Art der Befestigung des Lastträgers 2 ebenfalls erkennbar.

Es versteht sich, dass das untere Befestigungselement 8 mit dem Halteteil 14 auch anders ausgebildet sein kann, um dieselbe Wirkung zu erzielen. Insbesondere kann die kreiszylindrische Öffnung 16 in der Platte 8 auch als - hier nicht dargestellte - mehrgängige Gewindebohrung und das Halteteil 14 mit einem dementsprechenden mehrgängigen Aussengewinde versehen sein, um die obengenannte Renkverbindung in der Art einer Schraubverbindung mit höchstens einer halben Umdrehung zu bewirken. In der Regel soll eine Viertelumdrehung für eine solche Befestigungsart genügen. Des weiteren ist es nicht unbedingt notwendig, dass der Lastträger 2 bezüglich des Halteteiles 14 verdreht wird, sondern kann das Halteteil 14 auch drehbar auf dem Fahrradrahmen 9 befestigt sein, wobei die Haltenocken 15 des Halteteiles 14 grösser ausgebildet sind, um dieses zwischen dem Zeigefinger und dem Daumen klemmen und verdrehen zu können. Ferner kann auch das obere Befestigungselement 6 anders ausgebildet sein, um die erforderliche Klemmverbindung mit dem Sattelrohr 7 herzustellen. Beispielsweise kann der Stift 27 anstatt mit einem Spannhebel 29 mit einer verbreiterten Wulst ausgebildet sein, die in eine kreiszylindrische Ringnut im Klemmteil 21 hineingreift, wobei in diesem Fall der Stift mittels eines Federelementes im Klemmteil 22 in seine Längsrichtung elastisch bewegbar gelagert sein soll. Jedoch ist die Ausbildung mit dem Spannhebel 29 besonders vorteilhaft, da eine äusserst schnelle und sichere Klemmbefestigung erreicht wird, die zusätzlich in der Klemmkraft wegen der Schraubverbindung des Stiftes 27 mit dem Querbolzen 31 einstellbar ist.

## Patentansprüche

1. Lastträger (2) für ein Zweiradfahrzeug (1), insbesondere für ein Fahrrad, mit einem Tragkörper (4) und diesen stützenden Streben (5), mit im unteren Bereich der Streben (5) montierten unteren Befestigungselementen (8) und einem oberen am Tragkörper (4) montierten Befestigungselement (6) zur Befestigung des Lastträgers (2) am Fahrzeug, wobei die unteren Befestigungselemente (8) auf je ein am Fahrzeug befestigbares Halteteil (14) aufsteckbar sind, dadurch gekennzeichnet, dass jedes untere Befestigungselement (8) durch eine Drehbewegung des Lastträgers (2) bezüglich des zugeordneten Halteteiles (14) an diesem formschlüssig befestigbar und von diesem wieder lösbar ist und dass das obere Befestigungselement (6) ein an einem Rohr (7) des Zweiradfahrzeuges (1) manuell festklemmbarer und wieder lösbarer Klemmverschluss ist.

2. Lastträger nach Anspruch 1, dadurch gekennzeichnet, dass das untere Befestigungselement (8) und das Halteteil (14) in der Art einer Renkverbindung, insbesondere einer Bajonettverbindung, miteinander verbindbar sind.

3. Lastträger nach Anspruch 2, dadurch gekennzeichnet, dass das Halteteil (14) ein Kreiszylinder mit zwei radial abstehenden Haltenocken (15) ist und das untere Befestigungselement (8) eine kreiszylindrische Öffnung (16) mit radialen den Haltenocken entsprechenden Ausnehmungen (17) aufweist.

4. Lastträger nach Anspruch 2, dadurch gekennzeichnet, dass das untere Befestigungselement (8) und das Halteteil (14) in der Art einer Schraubverbindung mit höchstens einer halben Umdrehung miteinander verbindbar sind.

5. Lastträger nach Anspruch 4, dadurch gekennzeichnet, dass das Halteteil (14) ein Kreiszylinder mit einem mehrgängigen Schraubengewinde ist und das untere Befestigungselement (8) eine kreisrunde Öffnung (16) mit einem gegengleichen mehrgängigen Schraubengewinde aufweist.

6. Lastträger nach einem der Ansprüche 1 bis 5, dadurch gekennzeichnet, dass der Klemmverschluss (6) zwei das Rohr (7) des Zweiradfahrzeuges (1) zu umgreifen bestimmte Klemmteile (21, 22) aufweist, die auf der einen Seite schwenkbar miteinander verbunden und auf der gegenüberliegenden Seite mittels eines Spannelementes miteinander in Klemmverbindung bringbar und wieder voneinander lösbar sind.

7. Lastträger nach Anspruch 6, dadurch gekennzeichnet, dass das Spannelement aus einem einerends schwenkbar in einem Klemmteil (22) gelagerten und andererends einen Spannhebel (29) drehbar tragenden Stift (27) und einer den Stift seitlich aufnehmenden Längsnut (26) im anderen Klemmteil (21) besteht, wobei der Spannhebel (29) im montierten Zustand die Klemmteile (21, 22) gegen das Fahrzeugrohr (7) festspannt und das andere Klemmteil (21) mindestens teilweise umgreift.

8. Lastträger nach einem der Ansprüche 1 bis 7, dadurch gekennzeichnet, dass das obere Befestigungselement (6) in Längsrichtung des Tragkörpers (4) verschiebbar an diesem montiert ist.

## Claims

1. A load carrier (2) for a two-wheeled vehicle (1), particularly for a bicycle, with a carrier member (4) and struts (5) which support this, with bottom fixing elements (8) mounted in the bottom area of the struts (5) and an upper fixing element (6) mounted on the carrier member (4), for fixing the load carrier (2) on the vehicle, whereby the bottom fixing elements (8) can each be fitted onto a holding part (14) which can be fixed on the vehicle, characterised in that each bottom fixing element (8) can, by a rotary movement of the load carrier (2) in respect of the associated holding part (14), be form-lockingly fixed on the said holding part and released from it again and in that the upper fixing element (6) is a clamping fastener which can be manually fixed on and subsequently removed again from a tube (7) of the two-wheeled vehicle (1).

2. A load carrier according to claim 1, characterised in that the bottom fixing element (8) and the holding part (14) can be connected to each other in the manner of a twist joint, particularly a bayonet connection.

3. A load carrier according to claim 2, characterised in that the holding part (14) is a circular cylinder with two radially projecting retaining studs (15) while the bottom fixing element (8) comprises a circularly cylindrical opening (16) with radial recesses (17) corresponding to the retaining studs.

4. A load carrier according to claim 2, characterised in that the bottom fixing element (8) and the holding part (14) can be connected to each other in the manner of a screwed connection with at most half a rotation.

5. A load carrier according to claim 4, characterised in that the holding part (14) is a circular cylinder with a multiple screw thread and the bottom fixing element (8) has a circular aperture (16) with an oppositely matching multiple screw thread.

6. A load carrier according to one of claims 1 to 5, characterised in that the clamping fastener (6) has two clamping parts (21, 22) intended to engage around the tube (7) of the two-wheeled vehicle (1) and which are on one side pivotably connected to each other while on the opposite side, they can by means of a clamping element, be brought into a clamping connection with each other and separated from each other again.

7. A load carrier according to claim 6, characterised in that the clamping element consists of a rod (27) which at one end is pivotably mounted in a clamping part (22) and which carries at the other in rotatable fashion a clamping lever (29), and, accommodating the rod laterally, a longitudinal groove (26) in the other clamping part (21), whereby the clamping lever (29), when in the assembled state, fixes the clamping parts (21, 22) rigidly against the vehicle tube (7) while at least partially engaging around the other clamping part (21).

8. A load carrier according to one of claims 1 to 7, characterised in that the upper fixing element (6) is mounted on the carrier member (4) in such a way as to be displaceable in the longitudinal direction thereof

## Revendications

1. Porte-bagages (2) pour un véhicule à deux roues (1), en particulier pour une bicyclette, comportant une armature porteuse (4), des tringles (5) de soutien de cette armature, comportant aussi des éléments de fixation inférieurs (8) montés dans la zone inférieure des tringles (5) et un élément de fixation supérieur (6) monté sur l'armature porteuse (4), pour fixer le porte-bagages (2) au véhicule, les éléments de fixation inférieurs (8) pouvant s'enficher sur une pièce support (14) qui peut se fixer sur le véhicule, caractérisé par le fait que chaque élément de fixation inférieur (8) peut se fixer à la pièce support (14), par complémentarité de forme, par un mouvement de rotation du porte-bagages (2) par rapport à cette pièce support associée (14) et peut à nouveau s'en détacher et que l'élément de fixation supérieur (6) est une fermeture par blocage, pouvant se bloquer manuellement sur un tube (7) du véhicule à deux roues (1) et s'en détacher à nouveau.

2. Porte-bagages selon la revendication 1, caractérisé par le fait que l'élément de fixation inférieur (8) et la pièce support (14) peuvent se relier l'un à l'autre à la façon d'une liaison à verrouillage, en particulier d'une liaison à baïonnette.

3. Porte-bagages selon la revendication 2, caractérisé par le fait que la pièce support (14) est un cylindre circulaire avec deux ergots de maintien (15) qui saillent radialement et que l'élément de fixation inférieur (8) présente une ouverture circulaire (16) avec des évidements (17) radiaux correspondant aux ergots de maintien.

4. Porte-bagages selon la revendication 2, caractérisé par le fait que l'élément de fixation inférieur (8) et la pièce support (14) peuvent se relier l'un à l'autre à la façon d'une liaison par vissage avec au maximum un demi tour.

5. Porte-bagages selon la revendication 4, caractérisé par le fait que la pièce support (14) est un cylindre circulaire avec un filetage à plusieurs filets et que l'élément de fixation inférieur (8) présente une ouverture circulaire (16) avec un taraudage à plusieurs filets antagoniste.

6. Porte-bagages selon l'une des revendications 1 à 5,, caractérisé par le fait que la fermeture par blocage (6) présente deux mors (21, 22) qui sont destinés à enserrer le tube (7) du véhicule à deux roues (1), qui sont reliés l'un à l'autre d'un côté avec liberté de pivotement et qui, du côté opposé, peuvent être amenés en liaison de blocage l'un avec l'autre au moyen d'un élément de serrage puis se détachent à nouveau l'un de l'autre.

7. Porte-bagages selon la revendication 6, caractérisé par le fait que l'élément de serrage est constitué d'une tige (27) qui, à l'une des extrémités, est portée, avec liberté de pivotement, dans un mors (22) et, à l'autre extrémité, porte, avec liberté de rotation, un levier de serrage (29) et, dans l'autre mors (21), d'une encoche longitudinale (26) qui reçoit latéralement la tige, le levier de serrage (29), à l'état monté, bloquant les mors (21, 22) contre le tube (7) du véhicule et enserrant au moins partiellement l'autre mors (21).

8. Porte-bagages selon l'une des revendications 1 à 7, caractérisé par le fait que l'élément de fixation supérieur (6) est monté sur l'armature porteuse (4) avec liberté de coulissement selon la direction longitudinale de cette armature.
